# FASCICULE DE BREVET EUROPEEN

(11) **EP 1 292 195 B1**
(45) Date de publication et mention de la délivrance du brevet: **27.02.2008**
(21) Numéro de dépôt: 01951534.5
(22) Date de dépôt: 30.05.2001
(51) Int. Cl.: A23G 9/46, A23G 9/50

(54) **ARTICLE DE CONFISERIE GLACEE ET PROCEDE DE PREPARATION**
SPEISEEISPRODUKT UND DESSEN HERSTELLUNG
ICE CONFECTIONERY PRODUCT AND PREPARATION METHOD

(30) Priorité: 31.05.2000 EP 00201932
(43) Date de publication de la demande: 19.03.2003
(73) Titulaire: SOCIETE DES PRODUITS NESTLE S.A., 1800 Vevey (CH)
(72) Inventeur: CATHENAUT, Philip, Igor, F-95440 Ecouen (FR); COSSIN, Véronique, F-60000 Beauvais (FR); DELANDE, Bruno, F-60690 Marseille en Beauvaisis (FR)
(74) Mandataire: Elleby, Gudrun
(86) Numéro de dépôt international: PCT/EP2001/006146
(87) Numéro de publication internationale: WO 2001/091572

(56) Documents cités:
- WO-A-95/20883
- WO-A-98/04149

## Description

L'invention se rapporte au domaine des articles de confiserie glacée moulés à base de glace à l'eau. Elle a trait plus particulièrement à un article de confiserie glacée moulé à base de glace à l'eau de texture tendre à coeur.

Les articles de confiserie glacée du genre des glaces à l'eau sont en général fabriqués par remplissage d'une composition pour glace à l'eau liquide à température positive, de l'ordre de 2-3 °C, dans des moules généralement en métal conducteur thermique, circulant dans une ambiance réfrigérante qui provoque la congélation lente par conduction de la composition pour glace à l'eau. L'ambiance réfrigérante peut être un bain de réfrigérant liquide, par exemple la saumure ou un tunnel de congélation à circulation d'air froid dans lequel les moules circulent.

Une fois congelés, les articles peuvent être laissés dans les moules qui servent en même temps de conditionnement, par exemple dans le cas des petits cylindres avec dispositif "push-up" ou des étuis souples en forme de cylindre applati à l'une des ses extrémités.

On peut également insérer un bâtonnet dans la masse de la composition glacée non encore solidifiée à coeur, continuer la solidifiation, démouler les articles par action de la chaleur sur la surface extérieure du moule, les durcir puis les emballer, par exemple en sachet souple ou "flow-pack".

De tels articles moulés ont généralement une texture dure due à la congélation lente et progressive par conduction, génératrice de gros cristaux de glace. On connait des articles de confiserie glacée composites dont la texture est tendre, constitués notamment d'un coeur en crème glacée foisonnée extrudé enrobé d'une composition de glace à l'eau, décrits par exemple dans EP-A-0710074 ou WO-A-9804149. La texture tendre de l'enrobage est obtenue dans ces procédés par immersion du coeur extrudé prérefroidi, dans une composition pour glace à l'eau et refroidissement très rapide à une température < -15° C, par exemple par trempage dans l'azote liquide de manière à durcir l'enrobage. Il est généralement nécessaire d'effectuer plusieurs cycles de trempage et durcissement successifs pour obtenur l'épaisseur d'enrobage désirée.

L'invention se propose de mettre à disposition un article de confiserie glacée à base de glace à l'eau moulé dont le coeur a une texture souple et constitue la garniture d'une gaufrette lui servant de moule.

L'article selon l'invention est caractérisé par le fait qu'il comprend:
i) Un coeur de glace à l'eau contenant 20 à 40 % en poids de matières sèches, foisonné à un taux de 20 à 80 % et dont la texture est semblable à celle d'une crème glacée extrudée et
ii) Une gaufrette protégée de la prise d'humidité au moins sur sa face au contact du coeur de glace à l'eau, par une couche barrière et
dans lequel la gaufrette est formée pour constituer un moule contenant le dit coeur.

Une particularité du coeur de glace à l'eau est qu'il contient un stabilisant à propriétés gélifiantes qui peut être choisi parmi la gomme de caroube, la gomme guar, la gomme tara, le carboxyméthyl cellulose, la gélatine, les alginates, le carraghénane, les amidons, les pectines, la cellulose microcristalline ou un mélange de tels ingrédients.

On utilise de préférence les gommes xanthane, de caroube, la gélatine et les pectines et plus spécifiquement un mélange comprenant la gomme xanthane et la gomme de caroube, la gomme xanthane étant prédominante, ou comprenant la gélatine et la gomme de caroube, la gélatine étant prédominante.

Le taux du mélange stabilisant est < ou = 0,5 % en poids et est de préférence 0,3 à 0,4 % en poids.

La nature et le taux du mélange stabilisant en combinaison avec la teneur en matières sèches du coeur lui permettent de pouvoir être traité et foisonné en freezer et lui confèrent une texture semblable à celle de la crème glacée extrudée sortant du freezer à environ -5, -6° C.

Dans le contexte de l'invention, le taux de foisonnement peut être défini comme l'augmentation de volume du mix due à l'incorporation d'air exprimé en % en volume. Il est de préférence 30 à 50 %.
Avantageusement, le coeur a un taux de matières sèches de 28 à 32 % en poids.

En plus du mélange stabilisant, les dites matières sèches du coeur proviennent avantageusement:
pour jusqu'à 20 % en poids de purée de fruit, d'arôme et de colorant et
pour 20 à 27 % en poids d'hydrates de carbone, dont jusqu'à 7 % en poids de sirop de glucose.

On peut ainsi utiliser une purée de fruits ou en variante un arôme de fruit et un colorant.

Dans un mode de réalisation préférentiel, l'article de confiserie glacé selon l'invention est un cone glacé dont le contenant est une gaufrette et dont le coeur a une couleur et un arôme à base de fruit, et contient de préférence une quantité importante de fruit, notamment un extrait, par exemple une purée de fruit ou un arôme de fruit.

En variante d'une gaufrette en forme de cone ouvert, on peut utiliser une gaufrette creuse enroulée constituant un tube ou un taco, et dans ce cas la gaufrette est ouverte aux deux extrémités.

Le coeur souple et son contenant cropustillant constituent un contraste de textures.

Le coeur peut contenir des inclusions, des morceaux de fruits, secs ou confits, de gel, de fondant, de croquant, de sauce, de caramel, de chocolat, de confiserie sucrée ou de biscuits et avantageusement de préférence des morceaux ou brisures de fruit, par exemple du même fruit contenu, par exemple sous forme de purée dans la masse du coeur. Dans ce contexte, les inclusions peuvent être de dimensions allant de 0,1 à 10 mm, par exemple.

La gaufrette ne sert pas uniquement à maintenir la forme du produit, mais contribue également à la sensation gustative.

La gaufrette doit être protégée de la prise et de la reprise d'humidité, par enrobage, au moins sur sa face en contact avec la garniture constituant le coeur. Elle peut être enrobée d'une composition grasse telle qu'une couverture de chocolat ou de compound. La composition d'enrobage en question peut contenir des annexes telles que des morceaux de fruits secs ou des particules de céréales toastées ou soufflées.

L'inventon concerne également un procédé de préparation d'un article de confiserie glacée composite précédent, dans lequel
on présente une gaufrette mise en forme et servant de moule, ouverte à une extrémité ou à ses deux extrémités, et dont au moins la face intérieure est revétue d'une couche barrière d'humidité et
on introduit dans la gaufrette ouverte une composition de glace à l'eau foisonnée à un taux de 20 à 80 % constituant le coeur de l'article.

Selon un mode particulier de réalisation du procédé de préparation d'un article de confiserie glacée composite précédent, on fabrique le coeur en y introduisant des inclusions de dimension allant de 0,1 à 10 mm, on le refroidit et on l'introduit dans la gaufrette.

Selon un second mode de réalisation particulier du procédé de préparation d'un article de confiserie glacée précédent,
on procède au remplissage de la gaufrette mise en forme, avec une composition de glace à l'eau foisonnée à un taux de 20 à 80 % constituant le coeur de l'article,
et on l'enrobe avec une composition grasse.

Dans le cas des cones, on peut compléter le remplissage par un décor, par exemple en forme de flamme ou de rose et y déposer le cas échéant des annexes, par exemple sous forme de particules ou de morceaux qui peuvent être décoratifs.

Dans les cas des tubes, cigares ou tacos, on peut fermer les deux extrémités ouvertes de la gaufrette par des capuchons, par exemple de chocolat, qui dans ce cas peuvent recouvrir une portion de la surface extérieure de la gaufrette pour assurer une meilleure protection.

Quelque soit le mode de réalisation du procédé, le dosage de la composition de glace à l'eau constituant le coeur de l'article nécessite des moyens spécifiques permettant de remplir la gaufrette creuse avec une matière relativement dure et visqueuse, qui contient le cas échéant des inclusions de dimension de 0,1 à 10 mm.

Les dits moyens spécifiques peuvent être constitués d'un répartiteur relié au freezer maintenu sous pression par le freezer et associé à un dispositif doseur volumétrique comportant une chambre de dosage, dans lequel la pression permet une alimentation de la chambre de dosage.

Dans le contexte de l'invention, une matière relativement dure est une glace à l'eau à - 2° C, - 6° C, de préférence à - 5° C, - 6° C, foisonnée sortant d'un freezer. Sa texture est plus ferme et elle a un pourcentage d'eau congelée par rapport à l'eau totale de la recette qui est plus élevé qu'une composition liquide à glacer habituelle, et ceci de manière plus ou moins prononcée selon la composition du mélange à congeler.

Les dits moyens spécifiques peuvent être appliqués à toute machine dans laquelle les gaufrettes sont transportées sur des supports solidaires d'un convoyeur dans un tunnel à air pulsé assurant la surgélation, le convoyeur pouvant être rectiligne ou s'enrouler, par exemple en simple ou en double hélice, applatie ou de révolution, toute machine de type précédent dans laquelle le déplacement des gaufrettes est continu ou pas à pas.

Ainsi les moyens spécifiques peuvent être appliqués d'une manière très simple aux machines existantes.

Ce principe du dosage sous pression peut s'appliquer à différents types de doseuses tels que, par exemple les doseuses à boisseau de distribution et à cylindres verticaux ou horizontaux, les doseuses à soupapes ou de préférence, pour le remplissage des cones, les doseuses à buses plongeantes du type "bottom-up filler" associées à des dispositifs de monte et baisse qui sont réglées pour descendre à un niveau intermédiaire, c'est à dire qu'elles ne vont pas jusqu'au fond du cone de gaufrette.

Lorsque l'on met en oeuvre un dosage multi-pistes, la glace est répartie de manière homogène entre les différentes conduites de sortie du répartiteur et peut gaver les chambres de dosage, sans création de poche d'air.

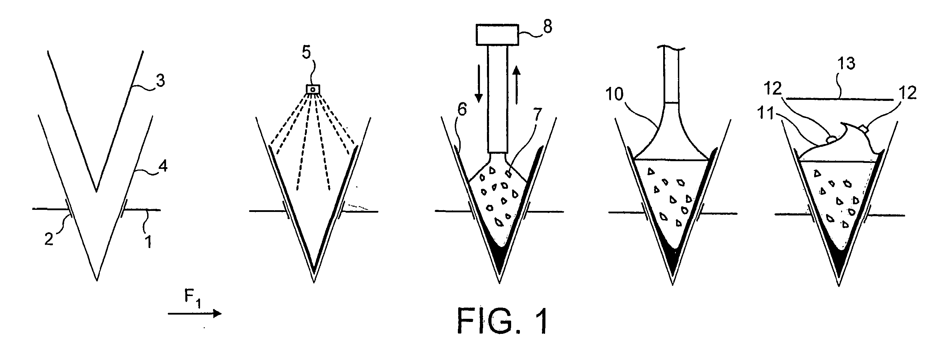

La mise en oeuvre du procédé est décrite ci-après à titre d'exemple non limitatif en liaison avec le dessin annexé relatif à un mode de réalisation préférentiel détaillé à l'exemple 1, la figure 1 du dessin annexé étant une représentation schématique de ce mode de réalisation.

Comme montré à la figure 1, pour mettre en oeuvre le procédé, on utilise de préférence une ligne de cones classique constituée d'une table 1 de supports 2 de cones de gaufrette 3 en mouvement selon f1. Les cones de gaufrette sont placés dans des étuis 4, par exemple en papier métalisé. Au moyen d'une buse de pulvérisation 5, on revêt l'intérieur du cone de gaufrette 3 et son bord supérieur d'une couche barrière de matière grasse 6, par exemple de chocolat ou de compound, qui sert à limiter ou si possible à éviter la prise d'humidité. On prépare le mix du coeur dans un tank (non représenté) selon un mode de pasteurisation classique après homogénéisation et maturation à environ 4° C pendant environ 4 h. Le tank est relié à un freezer (non représenté) et des inclusions 7 sont introduites et mélangées dans le mix sortant du freezer au moyen d'un dispositif d'alimentation (non représenté). A la sortie du dispositif d'alimentation, le mix contenant les inclusions est dirigé vers le dispositif de dosage du coeur 8.

En fonctionnement, un répartiteur (non représenté), par exemple une vis de gavage est actionné en rotation lente par un moteur extérieur en prise sur l'axe de la vis, par exemple un moteur pneumatique et l'étanchéité peut être assurée, par exemple par un joint à lèvres du côté du moteur. Le répartiteur est alimenté en continu par le freezer, et le débit comparé à une valeur de consigne qui peut générer un signal qui agit sur la fermeture d'une vanne ou sur la réduction de la vitesse de la pompe d'alimentation en produit venant du freezer de manière à diminuer son débit.

Les avantages apportés par le procédé par rapport aux procédés de moulage traditionnels sont multiples:
On peut doser la glace à coeur qui contient plus d'eau à l'état congelé que traditionnellement avec une amélioration correspondante de la texture qui est celle que l'on ne trouve habituellement que dans les articles extrudés.

Le temps de congélation peut être réduit de 30 à 50 %, ce qui permet une plus grande cadence et une meilleure productivité de la ligne.
La viscosité de la glace est telle que les inclusions qu'elle contient le cas échéant peuvent être réparties de manière uniforme sans décanter comme dans le cas d'une glace dosée liquide.

Les articles, en étant plus froids, peuvent être plus facilement décorés et/ou enrobés.

Les exemples ci-après illustrent l'invention. Dans ceux-ci, les parties et pourcentages sont pondéraux, sauf indication contraire.

### Exemple 1

### Préparation d'un cone glacé

1. On prépare un mix pour sorbet framboise qui constitue la glace à l'eau du coeur à partir des ingrédients suivants, dans les proportions indiquées:

| Ingrédient | % |
|---|---|
| Eau | 55,5 |
| Sirop de glucose | 6,32 |
| Gomme xanthane | 0,18 |
| Gomme de caroube | 0,12 |
| Trisodium citrate | 0,3 |
| Dextrose | 3,7 |
| Acide citrique | 0,25 |
| Sucrose cristallisé | 17,02 |
| Purée de framboise | 16 |
| Arôme de framboise | 0,16 |
| Colorant rouge naturel | 0,25 |

On mélange les ingrédients à température supérieure ou égale à 60° C sous agitation, jusqu'à obtenir une dissolution et une hydratation appropriée, on homogénéise et on pasteurise le mix puis on le refroidit et on le laisse maturer à 4° C sous agitation lente. Après passage dans un freezer avec aération, on obtient une composition de glace à l'eau foisonnée à 40 %, de température -5 à -6° C. On ajoute à la masse foisonnée 20 % de petits morceaux de framboise écrasée.
2. En référence à la figure 1, on présente des cones de gaufrette 3 dans leurs étuis 4 sous la doseuse 8.
3. On remplit de mix de glace à l'eau liquide préparé selon 1 ci-dessus les cones de gaufrette 3 ouverts par le haut à -5° C, -6° C par l'intermédiaire d'un répartiteur sous pression de 2 bar reliée au dispositif doseur à buse plongeante 8 qui descend au milieu des cavités des cones et les remplit tout en remontant. On finit ensuite de remplir les cones en déposant un décor 9 de crème glacée 10 en forme de flamme, que l'on complète par de la sauce au chocolat 11 et des annexes de cacahuètes grillées 12.On ferme le tout avec un couvercle 13 qui peut être une cartonnette ou un opercule en matière plastique transparent.

### Exemple 2

On procède à la fabrication de cones glacés comme à l'exemple 1, sauf que l'on place un décor de crème glacée constitué de deux crèmes glacées de couleur et parfum différents co-extrudées et à peine mélangées (par exemple par mélangeur statique), produisant un effet de marbrage.

## Revendications

1. Article de confiserie glacée moulé à base de glace à l'eau de texture tendre à coeur, **caractérisé par le fait qu'**il comprend:
i) Un coeur de glace à l'eau contenant 20 à 40 % en poids de matières sèches, foisonné à un taux de 20 à 80 % et dont la texture est semblable à celle d'une crème glacée extrudée et
ii) Une gaufrette (3) protégée de la prise d'humidité au moins sur sa face au contact du coeur de glace à l'eau, par une couche barrière et
dans lequel la gaufrette est formée pour constituer un moule contenant le dit coeur.

2. Article selon la revendication 1, **caractérisé par le fait que** le coeur de glace à l'eau contient un mélange stabilisant comprenant la gomme xanthane et la gomme de caroube, la gomme xanthane étant prédominante, à une concentration de 0,25 à 0,35 % en poids.

3. Article selon la revendication 2, **caractérisé par le fait que**, en plus du mélange stabilisant, les dites matières sèches du coeur proviennent avantageusement:
pour 10 à 20 % en poids de purée de fruit, d'arôme et de colorant et
pour 20 à 27 % en poids d'hydrates de carbone, dont 5 à 7 % en poids de sirop de glucose.

4. Article selon la revendication 1 **caractérisé par le fait qu'**il est un cone glacé dont le contenant est une gaufrette (3) et dont le coeur a une couleur et un arôme à base de fruit, et contient de préférence une quantité importante de fruit, notamment un extrait, par exemple une purée de fruit ou un arôme de fruit, et que, le cas échéant, le coeur contient des morceaux.

5. Article selon la revendication 4, **caractérisé par le fait que** le coeur contient des morceaux de 1 à 10 mm, notamment des morceaux de fruit.

6. Procédé de préparation d'un article de confiserie glacée selon l'une des revendications 1 à 5, dans lequel on présente une gaufrette (3) mise en forme et servant de moule, ouverte à une extrémité ou à ses deux extrémités, et dont au moins la face intérieure est revétue d'une couche barrière d'humidité et
on introduit dans la gaufrette (3) ouverte une composition de glace à l'eau foisonnée à un taux de 20 à 80 % constituant le coeur de l'article.

7. Procédé de préparation d'un article de confiserie glacée selon l'une des revendications 1 à 5, dans lequel on remplit la gaufrette (3) mise en forme, avec une composition de glace à l'eau foisonnée à un taux de 20 à 80 % constituant le coeur de l'article, et on l'enrobe avec une composition grasse.

8. Procédé selon la revendication 6 ou 7, **caractérisé par le fait que** l'on dose la glace constituant le coeur à partir d'un répartiteur muni de moyens d'agitation associé à un dispositif doseur plongeur (8) que le répartiteur est maintenu sous pression en amont du dispositif doseur et que le dispositif doseur (8) descend dans les gaufrettes ouvertes et les remplit tout en remontant, ce qui permet de les remplir sans formation de poches d'air.

9. Procédé selon la revendication 6 ou 7, **caractérisé par le fait que** la composition du coeur est remplie à - 6° C, - 7° C.

10. Procédé selon l'une des revendications 6 ou 7, **caractérisé par le fait que** la composition du coeur est introduite sous pression, générée par un freezer.

## Claims

1. A moulded frozen confectionery product based on water ice and having a soft texture at the centre, **characterised in that** it comprises:
i) a centre of water ice containing 20 to 40 wt.% solids, expanded to a degree of 20 to 80% and having a texture that is similar to that of an extruded ice cream, and
ii) a wafer (3) protected from moisture absorption, at least on its surface which is in contact with the water ice centre, by a barrier layer, and
wherein the wafer is formed to constitute a mould containing said centre.

2. The product according to claim 1, **characterised in that** the water ice centre contains a stabilising mixture comprising xanthan gum and carob gum, with the xanthan gum being predominant, in a concentration of 0.25 to 0.35 wt.%.

3. The product according to claim 2, **characterised in that**, in addition to the stabilising mixture, said solids in the centre are advantageously 10 to 20 wt.% due to fruit purée, flavouring and colouring, and 20 to 27 wt.% to carbohydrates, of which 5 to 7 wt.% is glucose syrup.

4. The product according to claim 1, **characterised in that** it is a frozen cone, the container of which is a wafer (3) and the centre of which has a fruit-based colour and flavour, and preferably contains a significant quantity of fruit, particularly an extract, for example a fruit puree or a fruit flavouring, and **in that** the centre optionally contains pieces.

5. The product according to claim 4, **characterised in that** the centre contains pieces of 1 to 10 mm, particularly fruit pieces.

6. A process for preparing a frozen confectionery product according to one of claims 1 to 5, wherein a shaped wafer (3) is presented which acts as a mould, open at one end or at both ends and at least the internal face of which is covered with a moisture barrier layer, and a water ice composition expanded to a degree of 20 to 80% constituting the centre of the product is introduced into the wafer (3).

7. A process for preparing a frozen confectionery product according to one of claims 1 to 5, wherein the shaped wafer (3) is filled with a water ice composition expanded to a degree of 20 to 80% constituting the centre of the product, and coated with a fatty composition.

8. The process according to claim 6 or 7, **characterised in that** the ice constituting the centre is metered from a distributor equipped with stirring means connected to a metering plunger device (8), **in that** the distributor is maintained under pressure upstream of the metering device and **in that** the metering device (8) descends into the open wafer and fills them while ascending, thus making it possible to fill them without the formation of air pockets.

9. The process according to claim 6 or 7, **characterised in that** the centre composition is filled at - 6°C, - 7°C.

10. The process according to one of claims 6 or 7, **characterised in that** the centre composition is filled under pressure generated by a freezer.

## Patentansprüche

1. Speiseeisprodukt, das auf der Basis von Wassereis mit weicher Struktur im Kern geformt ist, **dadurch gekennzeichnet, daß** es aufweist:
i) einen Wassereiskern, der 20 bis 40 Gew.-% Trockensubstanzen enthält, mit einer Rate von 20 bis 80 % aufgequollen ist, und dessen Struktur derjenigen einer extrudierten Eiscreme ähnlich ist, und
ii) eine Waffel (3), die gegen die Aufnahme von Feuchtigkeit wenigstens an ihrer Seite in Kontakt mit dem Wassereiskern durch eine Sperrschicht geschützt ist, und
bei welchem die Waffel derart geformt ist, daß sie eine Form bildet, die den Kern enthält.

2. Produkt nach Anspruch 1, **dadurch gekennzeichnet, daß** der Wassereiskern ein stabilisierendes Gemisch mit Xanthangummi und Johannisbrotgummi enthält, wobei der Xanthangummi mit einer Konzentration von 0,25 bis 0,35 Gew.-% vorherrschend ist.

3. Produkt nach Anspruch 2, **dadurch gekennzeichnet, daß** die Trockensubstanzen des Kerns außer dem stabilisierenden Gemisch vorteilhaft stammen von:
für 10 bis 20 Gew.-% von Fruchtpüree, Aroma und Farbstoff und
für 20 bis 27 Gew.-% von Kohlenhydraten, davon 5 bis 7 Gew.-% von Glucosesirup.

4. Produkt nach Anspruch 1, **dadurch gekennzeichnet, daß** es ein Eiskegel ist, dessen Behälter eine Waffel (3) ist und dessen Kern eine Farbe und ein Aroma auf Fruchtbasis hat und bevorzugt eine beträchtliche Menge Frucht enthält, insbesondere einen Extrakt, z.B. ein Fruchtpüree oder ein Fruchtaroma, und daß der Kern gegebenenfalls Stücke enthält.

5. Produkt nach Anspruch 4, **dadurch gekennzeichnet, daß** der Kern Stücke von 1 bis 10 mm, insbesondere Fruchtstücke, enthält.

6. Verfahren zur Herstellung eines Speiseeisprodukts nach einem der Ansprüche 1 bis 5, bei welchem man eine Waffel (3) präsentiert, die geformt ist und als Form dient, die an einem Ende oder an ihren zwei Enden offen ist, und von der wenigstens die Innenseite mit einer Feuchtigkeitssperrschicht überzogen ist, und man in die offene Waffel (3) eine Wassereiszusammensetzung einbringt, die mit einer Rate von 20 bis 80 % aufgequollen ist und den Kern des Produkts bildet.

7. Verfahren zur Herstellung eines Speiseeisprodukts nach einem der Ansprüche 1 bis 5, bei welchem man die geformte Waffel (3) mit einer Wassereiszusammensetzung füllt, die mit einer Rate von 20 bis 80 % aufgequollen ist und den Kern des Produkts bildet, und sie mit einer fetten Zusammensetzung umhüllt.

8. Verfahren nach Anspruch 6 oder 7, **dadurch gekennzeichnet, daß** man das den Kern bildende Eis ausgehend von einem Verteiler dosiert, der mit Rührmitteln ausgestattet ist und einer Dosier-Tauch-Vorrichtung (8) zugeordnet ist, daß der Verteiler stromaufwärts von der Dosiervorrichtung unter Druck gehalten wird, und daß die Dosiervorrichtung (8) in die offenen Waffeln hinunterfährt und sie füllt, wobei sie gleichzeitig wieder hinauffährt, wodurch sie ohne Bildung von Lufttaschen gefüllt werden können.

9. Verfahren nach Anspruch 6 oder 7, **dadurch gekennzeichnet, daß** die Zusammensetzung des Kerns bei - 6°C, -7°C gefüllt wird.

10. Verfahren nach einem der Ansprüche 6 oder 7, **dadurch gekennzeichnet, daß** die Zusammensetzung unter Druck eingebracht wird, der von einer Frosteranlage erzeugt wird.
